# EUROPÄISCHE PATENTANMELDUNG

(11) **EP 1 239 176 A1**
(43) Veröffentlichungstag der Anmeldung: **11.09.2002**
(21) Anmeldenummer: 02003423.7
(22) Anmeldetag: 14.02.2002
(51) Int. Cl.: F16D 23/06

(54) **Schaltkupplung mit einer Synchronisiereinrichtung**

(30) Priorität: 10.03.2001 DE 10111573
(71) Anmelder: INA- Schaeffler KG, 91074 Herzogenaurach (DE)
(72) Erfinder: Schwuger, Josef, 91315 Höchstadt (DE); Röckelein, Ernst, 96138 Burgebrach (DE); Martin, Reiner, 96178 Pommersfelden (DE)

(57) **Zusammenfassung**

Eine Schaltkupplung (38) mit einer Synchronisiereinrichtung, mit wenigstens einem auf einer Getriebewelle (44) angeordneten Gangrad (42, 43), mit wenigstens einer verdrehfest zu der Getriebewelle (44) angeordneten sowie bei einem Schaltvorgang mittels Schaltkräften axial zu der Getriebewelle (44) verschiebbaren Schaltmuffe (39) mit wenigstens einem der Getriebewelle (44) verdrehfest zugeordneten Reibring (54, 55) sowie mit mindestens einem elastischen Federelement (58) ist so aufgebaut, dass das Federelement (58) zwischen der Schaltmuffe (39) und dem Reibring (54, 55) angeordnet ist.

## Beschreibung

Die Erfindung betrifft eine Schaltkupplung mit einer Synchronisiereinrichtung, die Schaltkupplung zumindest bestehend aus wenigstens einem auf einer Getriebewelle angeordneten Gangrad und bestehend aus einer verdrehfest zu der Getriebewelle angeordneten sowie bei einem Schaltvorgang mittels Schaltkräften axial zu der Getriebewelle verschiebbaren Schaltmuffe mit einer Kupplungsverzahnung und die Schaltkupplung weiterhin bestehend aus wenigstens einem der Getriebewelle verdrehfest zugeordneten Reibring sowie mindestens einem mittels der Schaltmuffe beaufschlagten elastischen Federelement, wobei das Gangrad über eine Gegenverzahnung zu der Kupplungsverzahnung verdrehfest mit der Getriebewelle kuppelbar ist und der Reibring bei einem Schaltvorgang zumindest zeitweise eine Reibpaarung mit einer wenigstens verdrehfest mit dem Gangrad gekoppelten Reibfläche bildet.

### Hintergrund der Erfindung

Für das Kuppeln der Getriebewelle mit dem Gangrad wird die Schaltmuffe unter dem Einfluß einer Schaltkraft in Richtung eines der in der Regel zu ihren beiden Seiten angeordneten Gangräder verschoben. Beim Kuppeln der Getriebewelle mit dem Gangrad greift die verdrehfest zur Getriebewelle angeordnete Schaltmuffe mit einer Kupplungsverzahnung erst in eine dem Gangrad zugeordnete Gegenverzahnung, wenn die Drehzahlen der Getriebewelle und des Gangrades aneinander angeglichen sind. Dazu ist die Schaltkupplung mit einer Synchronisiereinrichtung versehen. Zur Synchronisiereinrichtung gehören ein oder in Mehrfachsynchronisierungen oft auch zwei der Getriebewelle verdrehfest zugeordnete Reibringe. Die Reibringe sind in der Fachwelt oft auch als Synchron- oder Synchronisierringe bezeichnet. Das Gangrad ist in der Regel mit einer oder mehreren Reibflächen gekoppelt. Diese Reibflächen befinden sich z.B. innen oder außen an einem Zwischenring. Auf diese Reibflächen des Zwischenringes wirkt jeweils eine Reibfläche eines äußeren bzw. inneren Synchronringes. Die Gegenverzahnung ist entweder mit an dem Gangrad ausgebildet oder mit einem Kupplungskörper an dem Gangrad befestigt.

Moderne Synchronisationen weisen außerdem in der Regel eine Sperreinrichtung auf. Diese Sperreinrichtung verhindert das vorzeitige Ineinandergreifen der Verzahnungen der Schaltmuffe und des Kupplungskörpers vor dem Abschluß der Synchronisation. Die Sperreinrichtung ist oft aus einer Sperrverzahnung mit Anteilen an einem der Reibringe (zumeist des äußeren) und an der Schaltmuffe gebildet. Der/die Reibring(e) sind zu Beginn eines Schaltvorganges oft durch federnd gelagerte und mittels der Schaltmuffe betätigte Druckstücke axial auf die Reibfläche verschoben.

Die Reibringe sind zumeist verdrehfest an einem Schaltmuffenträger aufgenommen. Der Schaltmuffenträger nimmt außerdem die Druckstücke mit ihren Federn und an seinem Außendurchmesser die Schaltmuffe auf. Die Schaltmuffe sitzt verdrehfest und axial verschiebbar auf dem Schaltmuffenträger. Der Schaltmuffenträger wiederum sitzt verdrehfest und axial fest auf der Getriebewelle. Derartige Schaltkupplungen weisen eine recht hohe Anzahl an Einzelteilen auf und erfordern einen recht hohen Aufwand für die Montage.

Der Aufbau einer Schaltkupplung und einer Sperreinrichtung nach dem Stand der Technik ist in DE 43 24 815 A1 näher beschrieben. Diese Schaltkupplung der gattungsbildenden Art weist außer den schon beschriebenen Elementen auch elastische Elemente wie Federn auf. Die Federn sind zwischen die Kupplungsverzahnung der Schaltmuffe und die Schaltmuffe geschaltet und sollen zur Verbesserung des Schaltkomforts am Schalthebel spürbare Kraftspitzen während des Schaltens eines Ganges und damit während des Verbindens der Getriebewelle mit dem Gangrad verhindern. Die Sperrverzahnung und die Kupplungsverzahnung sind dazu getrennt voneinander ausgeführt.

### Zusammenfassung der Erfindung

Die Aufgabe der Erfindung ist es, eine Schaltkupplung zu schaffen, die sich bei Beibehaltung der Vorzüge bekannter Schaltkupplungen, insbesondere der Beeinflussung des Schaltkraftverlaufs für verbesserten Schaltkomfort mittels Federelementen, einfach und kostengünstig herstellen läßt.

Diese Aufgabe ist nach dem kennzeichnenden Teil des Anspruchs 1 dadurch gelöst, daß das Federelement zwischen der Schaltmuffe und dem Reibring angeordnet ist, wobei das Federelement wenigstens zeitweise die Schaltkraft von der Schaltmuffe auf den Reibring übertragend sich vorgespannt an der Schaltmuffe abstützt. Das Federelement ist somit zwischen die Schaltmuffe und den Reibring geschaltet. In Mehrfachsynchronisierungen ist der Reibring vorzugsweise der äußere Synchronring. Zumeist ist dieser Synchronring auch mit einem Anteil der Sperrverzahnung versehen. Die Schaltkraft bzw. Schaltbewegung wird bei Beginn des Schaltvorganges von der Schaltmuffe über das Federelement auf den Reibring übertragen und der Reibring dabei für einen Reibschluß gegen die Reibfläche an dem Gangrad bewegt. Zusätzliche Druckstücke zur Übertragung der Schaltkraft bzw. der Schaltbewegung in dem Schaltmuffenträger entfallen. Die Dachverzahnung der Schaltmuffe trifft sanft gebremst auf die Sperrverzahnung des Reibringes.

Die Charakteristik der Schaltkraft ist in einer Schaltkupplung gemäß Erfindung durch die Charakteristik bzw. Kennung der Feder beeinflusst. Durch wahlweisen Einsatz von Federn mit unterschiedlicher Kennung, kombiniert oder einzeln wirkend, ist die Charakteristik der Schaltkraft in einer erfindungsgemäßen Schaltkupplung vorbestimmbar und individuell anpassbar bzw. beeinflussbar. Es sind bevorzugt mehrere Federn am Umfang der Schaltkupplung angeordnet und dabei in einer Vormontage in der Schaltmuffe untergebracht. Denkbar ist es auch, Federn an dem der Schaltmuffe gegenüberliegenden äußeren Synchronring anzubringen. Sind beidseitig der Schaltmuffe Gangräder angeordnet, so sind entweder einseitig oder beidseitig sich in Typ, Anzahl und Kennung gleichende oder unterscheidende Federn an der Schaltmuffe vorgesehen.

Eine Ausgestaltung der Erfindung sieht vor, daß die Schaltmuffe axial verschiebbar auf der Getriebewelle sitzt und das Federelement in der Schaltmuffe aufgenommen ist. Ein Schaltmuffenträger entfällt. Die Schaltmuffe sitzt direkt axial verschiebbar und verdrehfest auf der Getriebewelle. Die Federelemente sind in der Schaltmuffe aufgenommen. Da sich in der Regel links und rechts der Schaltmuffe Gangräder und Synchronringe befinden, sind auch in der Schaltmuffe beidseitig derartige Anordnungen aus einem oder mehreren Federelementen vorgesehen. Die Einheiten aus Schaltmuffe und Federelementen sind vormontierbar. Der Umfang der Einzelteile ist auf ein Minimum begrenzt.

Weitere Ausgestaltungen der Erfindung sehen vor, daß das Federelement durch wenigstens drei an einer Seite am Umfang verteilt angeordnete Schraubenfedern gebildet ist. Die Schraubenfedern stecken in einer Aufnahme oder sind jeweils in einer Hülse geführt und gehalten, wobei dann die Hülse in der Schaltmuffe aufgenommen ist. Die Schaltmuffe verschiebt beim Auftreffen der Schraubenfedern auf den Reibring, diesen auf oder gegen die mit dem Gangrad gekoppelte Reibfläche. Nach der Synchronisation wird die Schaltmuffe weiter gegen den Widerstand der Federn verschoben. Schließlich stehen die Kupplungsverzahnung der Schaltmuffe und die dem Gangrad zugeordnete Gegenverzahnung miteinander im Eingriff. Da die Federkraft immer noch wirkt, muß die Schaltmuffe mittels einer geeigneten Arretierung in oder außerhalb der Schaltkupplung in dieser Stellung gehalten werden. Deshalb ist mit einer bevorzugten Ausgestaltung vorgesehen, daß die Schaltmuffe mittels wenigstens eines Arretierelementes zumindest in zwei Schaltstellungen arretierbar ist, wobei die Arretierung zwischen der Schaltmuffe und der Getriebewelle angeordnet ist. Dabei ist z.B. eine mittels einer Feder vorgespannte Kugel oder ein federbelasteter Rastbolzen in einer Rastkontur verrastet. Die Kugel oder der Bolzen sind mit der Feder entweder in der Nabe der Schaltmuffe oder in einer Bohrung der Getriebewelle aufgenommen und rasten dann z.B. in eine gegenüberliegenden Nut oder Vertiefung in der Getriebewelle oder in der Nabe ein.

Die Schraubenfedern sind in einer weiteren Ausgestaltung vorzugsweise jeweils in einem Gehäuse geführt und gehalten. Eine Kugel sitzt ebenfalls, über den Rand der Hülse überstehend, in dem Gehäuse und ist dort gehalten und mittels einer oder wenigstens mittels zwei konzentrisch zueinander angeordneten Federn gegen den Rand des Gehäuses vorgespannt. Die Kugel trifft bei einer Schaltbewegung der Schaltmuffe auf eine Rampe an dem Reibring. Die Kontur der Rampe steigt in Richtung des Gangrades von der Kugel weg an. Mittels der Kugel wird die Schaltbewegung axial auf den Reibring übertragen, der seinerseits axial bewegt die Reibpaarung mit der zum Gangrad gekoppelten Reibfläche oder dem Zwischenring eingeht. Beim weiteren Verschieben der Schaltmuffe steigt die Kugel entweder weiter an der Rampe auf, wobei die Schaltkraft zunimmt, oder die Kugel rollt auf gleichem Höhenniveau ohne weiteren Anstieg der Schaltkraft weiter. Denkbar ist auch, daß die Kugel in eine sich der Rampe in axialer Richtung anschließende Vertiefung oder Mulde einrastet, aus der die Kugel beim Zurückschieben der Schaltmuffe in Richtung der Neutralstellung wieder auf die Rampe aufsteigt. Auf diese Weise wird der Reibring beim Gangwechsel von der Reibpaarung sicher gelöst. Die Schaltmuffe nimmt den Reibring bis zu einem axialen Anschlag mit, um dann nach dem Aufsteigen der Kugel aus der Vertiefung endgültig von der Kugel und damit der Schaltmuffe getrennt zu sein.

Für die letztgenannte Ausgestaltung der Erfindung ergeben sich eine Vielzahl von Möglichkeiten, die Charakteristik des Schaltkraftverlaufes zu beeinflussen. Das geschieht einmal über die Kennlinie der Feder(n) in den Gehäuse(n) und auch über die Gestaltung der Rampe, insbesondere wieder über die Gestaltung der Konturlinie der Rampe. Dabei ist ein progressiv verlaufender Anstieg der Rampenkontur ebenso denkbar wie ein degressiv oder linear verlaufender. Eine weitere Möglichkeit der Beeinflussung des Kraftverlaufes ergibt sich durch den Winkel, mit dem der Vektor der Federkraft zur Rampenkontur oder zur Längsmittelachse der Schaltkupplung geneigt ist. Der Winkel ist rechtwinklig oder weicht von einem rechten Winkel ab.

Eine Ausgestaltung der Erfindung sieht vor, daß das Federelement durch mindestens eine radial auf einer Nabe der Schaltmuffe zentrierten Tellerfeder gebildet ist. Mit dem Einsatz einer oder mehrerer vorzugsweise in Reihe geschalteter Tellerfeder(n) lässt sich die Anzahl der notwendigen Teile für eine Schaltkupplung weiter gering halten. Es ist auch denkbar, daß die Schaltkupplung mit unterschiedlichen Typen, z.B. einer Kombination der vorgenannten Federn versehen ist. Die sich unterscheidenden Typen von Federn sind dabei gemischt an einer Seite oder nach Type(n) getrennt an jeweils einer Seite der Schaltmuffe angeordnet.

Schließlich sieht eine Ausgestaltung der Erfindung vor, daß mehrere der Federelemente am Umfang einer zumindest zweiteilig aus Blech gebildeten Schaltmuffe angeordnet sind, wobei die Schaltmuffe eine Nabe mit radial am Innenumfang der Nabe hervorstehenden sowie umfangsseitig zueinander beabstandeten und in das Blech geformten Keilen aufweist. Die Nabe ist mittels der Keile verdrehfest auf der Getriebewelle angeordnet und die Schaltmuffe wenigstens einseitig mit einer in das Blech geformten Kupplungsverzahnung versehen. Die Blechformteile sind aus Platinen oder Bandmaterial ausgeschnitten und anschließend geformt. Das Material der Bleche wiederum ist vorzugsweise durchhärtbar oder an seiner Oberfläche härtbar. Ihre Form erhalten die Blechformteile einschließlich der daran ausgebildeten Verzahnungen/Keilprofile im wesentlichen durch Prozesse der Blechumformung, wie beispielsweise durch Tiefziehen und Prägen. Die Dicke des Ausgangmateriales ist abhängig von funktionellen Erfordernissen, wie z.B. der erforderlichen Festigkeit der Verzahnung oder der Steifigkeit der Schaltmuffe gegen Verwindung. Dabei liegt die Dicke vorzugsweise in einem Bereich von 1,5 mm bis 7 mm.

Eine spanabhebende Bearbeitung an der Schaltmuffe gemäß Erfindung ist ggf. für feine Nacharbeiten vorgesehen. Aussparungen und Durchbrüche sind vorzugsweise einfach durch Stanzen in das vor dem Formen flach ausgestreckt vorliegende Ausgangsmaterial oder am ausgeformten Blechformteil einzubringen. Die geformten Blechteile sind vor dem Verbinden oder nach ihrem Verbinden zur Schaltmuffe partiell oder komplett gehärtet. Wenn es notwendig ist, sind die Blechformteile weiter an ihrer Oberfläche, beispielsweise durch Nitrieren, Konservieren und Beschichten, behandelt. Der Vorteil einer derartig gestalteten Schaltmuffe liegt darin, daß ihre räumlich- geometrische Formgestaltung nahezu keinen Einschränkungen unterliegt. Die Zeiten für die Herstellung sind kurz. Ein Großteil des zur Fertigung eingesetzten Ausgangsmateriales wird tatsächlich zur Bildung der geometrischen Form des Blechformteiles verwendet und geht nicht durch aufwendige spanabhebende Ausarbeitung verloren. Eine derartig gestaltete Schaltmuffe enthält somit auch kaum überflüssiges Material. Das Bauteil enthält nur soviel Material, wie für die Funktion und Festigkeit der Schaltmuffe erforderlich ist. Die Schaltmuffe zeichnet sich durch ein geringes Gewicht aus. Durch die sparsame Verwendung an Material und die kurzen Herstellungszeiten für die Blechformteile eignet sich eine derartige Schaltmuffe insbesondere für ihre Fertigung in der Massen- bzw. Großserienproduktion.

Die Blechformteile sind wahlweise zueinander symmetrisch ausgebildet oder unterscheiden sich in ihrer Form voneinander. Vorzugsweise ist jedes Blechformteil jeweils durch einen schalenförmigen Abschnitt gebildet. Dabei sind die Böden der Abschnitte zur Bildung der Schaltmuffe aneinandergefügt. Denkbar ist auch, die Schalen der Schaltmuffe an ihren Rändern zusammenzufügen, so daß die Schalen einen Hohlraum zwischen sich einschließen.

Sinnvoll ist auch eine Integration der anfangs erwähnten Arretierung bzw. des Arretierelementes in eine Aufnahme der Schaltmuffe aus Blech. Die vorzugsweise aus Feder und Kugel gebildeter Arretierung ist dabei in einer durch die beiden Blechformteile begrenzten Aufnahme untergebracht. Der Einsatz von gleichmäßig am Innenumfang verteilt angeordneten und mit Federkraft gegen die Getriebewelle vorgespannten Kugeln als Arretierelemente sorgt aufgrund der Federn bei entsprechender Auslegung für ein Zentrieren der Mittenachse von Schaltmuffe und Getriebewelle zueinander. Das Spiel im Sitz der Schaltmuffe auf der Getriebewelle wird durch die Federn federnd überbrückt.

Schaltmuffen ohne das vorab beschriebene Arretierelement sind z.B. mit einer externen Arretierung in der Neutralstellung oder in Schaltstellungen arretierbar. Diese Arretierung sitzt außerhalb der Schaltkupplung und wirkt beispielsweise auf eine Schaltschiene/-stange mit einer Schaltgabel. Die Schaltgabel wiederum steht im Eingriff mit der Schaltmuffe. Die Schaltschiene und damit auch die Schaltmuffe ist mittels der Arretierung in einer oder mehreren vorbestimmten Positionen arretiert.

Die Ränder eines Blechformteiles bilden die radiale äußere Begrenzung der Schaltmuffe. An den Rändern ist vorzugsweise jeweils die Kupplungsverzahnung ausgeformt. Der Boden des Blechformteiles ist für den Sitz auf der Getriebewelle zumindest gelocht und mit einem formschlüssig mit dem Wellensitz korrespondierenden Profil, beispielsweise einer Verzahnung, versehen. Bevorzugt ist der Boden der Schalen jedoch gelocht und axial ins Innere der Schale hinein oder von der Schale wegweisend durchgestellt. In dieser somit entstandenen Nabe bzw. an einem Blechumformteil entstandenen Teil einer Nabe sind dann vorzugsweise in Längsrichtung verlaufende Zahnprofile eingeformt. Die Blechformteile sind bevorzugt am Boden des Napfes miteinander verschweißt oder vernietet.

### Kurze Beschreibung der Zeichnungen

Die Erfindung ist nachfolgend anhand von mehreren Ausführungsbeispielen näher erläutert.

Es zeigen:
- Figur 1: Ein Ausführungsbeispiel einer Schaltkupplung mit einer zweiteiligen Schaltmuffe aus Blech, dargestellt im Längsschnitt,
- Figur 2: ein Ausführungsbeispiel einer Schaltkupplung mit einer zweiteiligen auf einer Getriebewelle arretierten Schaltmuffe aus Blech, dargestellt im Längsschnitt,
- Figur 3: ein Ausführungsbeispiel einer Schaltkupplung mit einer einfachen Synchronisierung, mit einer zweiteiligen Schaltmuffe aus Blech, mit einem verdrehfest auf der Getriebewelle sitzenden Reibring und mit Federn zwischen der Schaltmuffe und dem Reibring, dargestellt im Längsschnitt,
- Figur 4: ein Ausführungsbeispiel einer Schaltkupplung mit einer Doppelsynchronisation, mit einer zweiteiligen Schaltmuffe aus Blech, mit einem verdrehfest auf der Getriebewelle sitzenden Reibring und Federn zwischen der Schaltmuffe und dem Reibring, dargestellt im Längsschnitt,
- Figur 5: ein Ausführungsbeispiel einer Schaltkupplung mit einer Doppelkonussynchronisation, mit einer zweiteiligen Schaltmuffe aus Blech, mit verdrehfest auf der Getriebewelle sitzenden Reibringen und mit Federn zwischen der Schaltmuffe und dem äußeren Reibring, dargestellt im Längsschnitt,
- Figur 6: ein Ausführungsbeispiel eines inneren Reibringes für den Sitz auf der Getriebewelle,
- Figur 7: der Reibring nach Figur 6, in der Seitenansicht sowie teilweise geschnitten,
- Figur 8: ein Ausführungsbeispiel eines äußeren Reibringes für den Sitz auf der Getriebewelle,
- Figur 9: der Reibring nach Figur 8, in der Seitenansicht sowie teilweise geschnitten,
- Figur 10: ein Ausführungsbeispiel eines äußeren Reibringes aus einer Doppelsynchronisation.
- Figur 11: den Reibring nach Figur 10, dargestellt in einem Schnitt entlang der Linie XI - XI nach Figur 10,
- Figur 12: ein weiteres Ausführungsbeispiel einer Schaltkupplung mit einer Doppelsynchronisation, mit einer zweiteiligen Schaltmuffe aus Blech, mit verdrehfest auf der Getriebewelle sitzenden Reibringen und mit federbelasteten Kugeln, wobei die Kugeln auf eine Rampe an dem äußeren Reibring wirken, dargestellt im Längsschnitt,
- Figur 13: eine vergrößerte Darstellung des Details Z aus Figur 12 in einer alternativen Ausgestaltung der Kontur der Rampe,
- Figur 14: ein Ausführungsbeispiel einer Schaltkupplung in einer Doppelsynchronisation, bei der zwischen der Schaltmuffe und dem äußeren Reibring Tellerfedern angeordnet sind, die Schaltmuffe, dargestellt in der Neutralposition zwischen den Gangrädern sowie dargestellt im Längsschnitt und
- Figur 15: die Schaltkupplung nach Figur 14, die Schaltmuffe, dargestellt in einer Position, in der ein Gang eingelegt ist, dargestellt im Längsschnitt

### Detaillierte Beschreibung der Zeichnungen

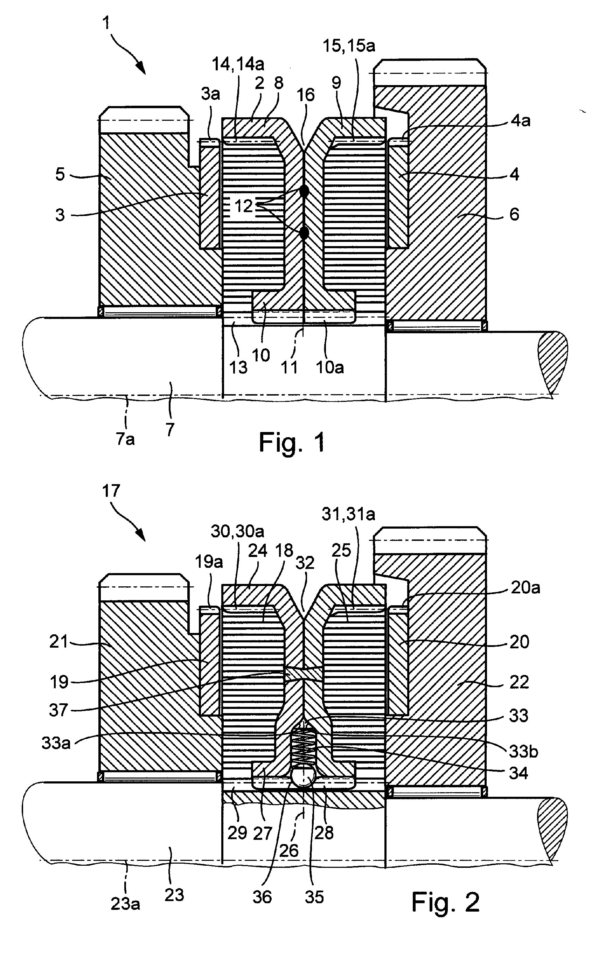

Figur 1 zeigt eine Schaltkupplung 1. Die Schaltkupplung 1 weist eine Schaltmuffe 2 sowie zwei Kupplungskörper 3 und 4 auf. Die Kupplungskörper 3 und 4 sind jeweils an einem Gangrad 5 bzw. 6 befestigt. Die Gangräder 5 und 6 sind jeweils rotierend auf einer Getriebewelle 7 gelagert. Die Schaltmuffe 2 ist zwischen den Gangrädern 5 und 6 angeordnet und aus zwei Blechformteilen 8 und 9 zusammengesetzt. Die Blechformteile 8 und 9 sind jeweils schalenförmig geformt und an einer zur Längsachse 7a der Getriebewelle 7 quer verlaufenden Teilungsebene 11 mittels Schweißverbindungen 12 stirnseitig aneinander befestigt. Jedes der Blechformteile 8 und 9 weist einen Anteil einer Nabe 10 mit radial nach innen abgehenden Keilen 10a auf. Mit den Keilen 10a greift die Schaltmuffe 2 verdrehfest sowie in beide Richtungen axial verschiebbar in längs verlaufende Nuten 13 der Getriebewelle 7 ein.

Jedes der Blechformteile 8 und 9 der Schaltmuffe 2 aus Figur 1 ist außerdem außen mit je einer Kupplungsverzahnung 14 bzw. 15 versehen. Die Kupplungsverzahnungen 14 und 15 weisen radial nach innen hervorstehende sowie längs ausgerichtete Zähne 14a bzw. 15a auf. Zu den Kupplungsverzahnungen 14 und 15 gibt es jeweils eine Gegenverzahnung 3a bzw. 4a. Die Gegenverzahnung 3a bzw. 4a ist, axial in dem Wirkbereich der jeweiligen Kupplungsverzahnung 14 und 15 liegend, mit radial nach außen weisenden Zähnen an den jeweiligen Kupplungskörper 3 oder 4 ausgebildet. Die in Richtung eines der Gangräder 5 oder 6 verschobene Schaltmuffe 2 greift mit einer der Kupplungsverzahnungen 14 oder 15 in eine der Gegenverzahnungen 3a bzw. 4a ein und verbindet somit die Getriebewelle 7 verdrehfest mit einem der Gangräder 5 oder 6.

Die Schaltmuffe 2 wird mittels einer in Figur 1 nicht dargestellten Schaltgabel axial verschoben. Die Schaltgabel greift dazu in eine radial nach außen offene Ringnut 16 ein. Die Ringnut 16 ist durch Mantelflächen der Blechformteile 8 und 9 begrenzt.

Figur 2 zeigt mit 17 ein weiteres Ausführungsbeispiel einer Schaltkupplung. Die Schaltkupplung 17 weist eine Schaltmuffe 18 sowie zwei Kupplungskörper 19 und 20 an Gangrädern 21 und 22 auf. Die Gangräder 21 und 22 sind jeweils rotierend auf einer Getriebewelle 23 gelagert. Die Schaltmuffe 18 ist zwischen den Gangrädern 21 und 22 angeordnet und aus zwei Blechformteilen 24 und 25 zusammengesetzt. Die Blechformteile 24 und 25 sind an einer zu der Längsachse 23a der Getriebewelle 23 quer verlaufenden Teilungsebene 26 mittels Nietverbindungen 37 aneinander befestigt. Jedes der Blechformteile 24 und 25 weist einen Anteil einer Nabe 27 mit radial nach innen abgehenden Keilen 28 auf. Mit den Keilen 28 greift die Schaltmuffe 18 verdrehfest sowie in beide Richtungen axial verschiebbar in entsprechende längs verlaufende Nuten 29 der Getriebewelle 23 ein.

Jedes der Blechformteile 24 und 25 der Schaltmuffe 18 aus Figur 2 ist außerdem außen mit je einer Kupplungsverzahnung 30 oder 31 versehen. Die Kupplungsverzahnungen 30 und 31 weisen radial nach innen hervorstehende sowie längs ausgerichtete Zähne 30a bzw. 31a auf. Zu den Kupplungsverzahnungen 30 und 31 gibt es jeweils eine Gegenverzahnung 19a bzw. 20a. Die Gegenverzahnung 19a bzw. 20a ist, axial in dem Wirkbereich der jeweiligen Kupplungsverzahnung 30 und 31 liegend mit radial nach außen weisenden Zähnen an dem jeweiligen scheibenförmigen Kupplungskörper 19 oder 20 ausgebildet. Die in Richtung eines der Gangräder 21 oder 22 verschobene Schaltmuffe 18 greift mit einer der Kupplungsverzahnungen 30 bzw. 31 in eine der Gegenverzahnungen 19a oder 20a und verbindet somit die Getriebewelle 23 verdrehfest mit einem der Gangräder 21 oder 22. Eine nicht dargestellte Schaltgabel greift zum Verschieben der Schaltmuffe 18 in eine radial nach außen offene Ringnut 32 ein. Die Ringnut 32 ist durch Mantelflächen der Blechformteile 24 und 25 begrenzt.

Die Blechformteile 24 und 25 der Schaltmuffe 18 in Figur 2 schließen eine Aufnahme 33 zwischen sich ein. Die Aufnahme 33 ist durch in die Stirnseiten der Blechformteile 24 und 25 eingebrachte Ausformungen 33a bzw. 33b gebildet. In dieser Aufnahme 33 ist ein durch eine Feder 34 vorgespanntes Arretierelement 35 aufgenommen. Das Arretierelement 35 ist in diesem Fall durch eine Kugel gebildet und mittels der Feder 34 in Richtung der Getriebewelle 23 vorgespannt sowie in einer Rastausnehmung 36 in der Getriebewelle 23 verrastet. Die Schaltmuffe 18 ist mittels des Arretierelementes 35 in einer neutralen Stellung zwischen den Gangrädern 21 und 22 arretiert.

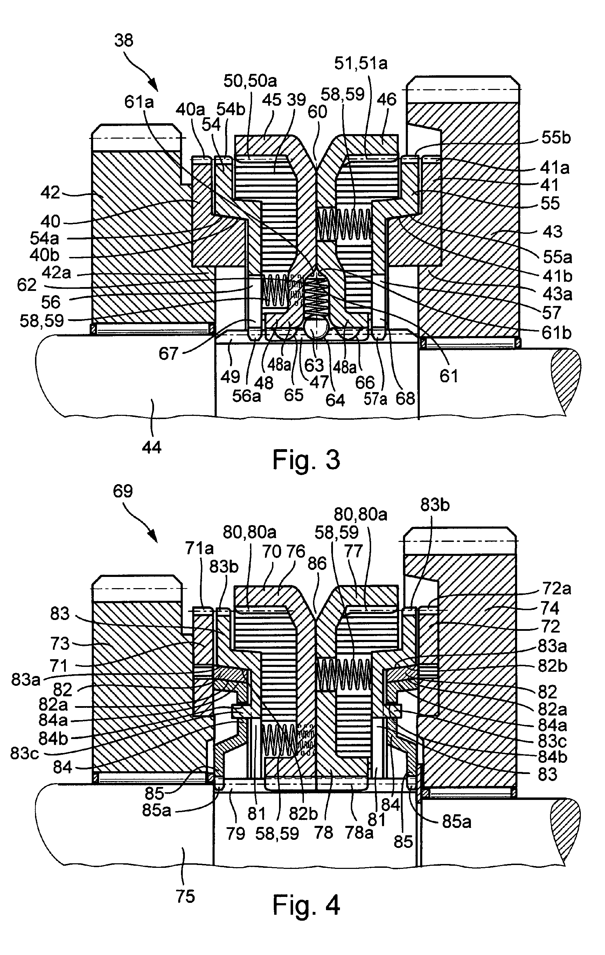

Figur 3 zeigt eine Ausführung der Erfindung, bei der eine Schaltkupplung 38 mit einer einfachen Synchronisation versehen ist. Die Schaltkupplung 38 weist eine Schaltmuffe 39 sowie zwei Kupplungskörper 40 und 41 an Gangrädern 42 bzw. 43 auf. Die Gangräder 42 und 43 sind jeweils rotierend auf einer Getriebewelle 44 gelagert. Die Schaltmuffe 39 ist zwischen den Gangrädern 42 und 43 angeordnet und aus zwei Blechformteilen 45 und 46 zusammengesetzt. Die Blechformteile 45 und 46 sind jeweils durch Ziehen geformt und miteinander verklebt. Jedes der Blechformteile 45 und 46 weist einen Anteil einer Nabe 48 mit radial nach innen abgehenden Keilen 47 auf. Mit den Keilen 47 greift die Schaltmuffe 39 verdrehfest sowie in beide Richtungen axial verschiebbar in längs verlaufenden Nuten 49 der Getriebewelle 44 ein.

Jedes der Blechformteile 45 und 46 der Schaltmuffe 39 aus Figur 3 ist außerdem außen mit je einer Kupplungsverzahnung 50 bzw. 51 versehen. Die Kupplungsverzahnungen 50 und 51 weisen Zähne 50a bzw. 51a auf. Zu den Kupplungsverzahnungen 50, 51 gibt es jeweils eine Gegenverzahnung 40a bzw. 41a. Die Gegenverzahnungen 40a und 41a sind, axial in dem Wirkbereich der jeweiligen Kupplungsverzahnung 50a oder 51a liegend, mit radial nach außen weisenden Zähnen an dem jeweiligen als Zahnscheibe ausgebildeten und auf einem Absatz 42a bzw. 43a des Gangrades 42 bzw. 43 aufgepreßten Kupplungskörper 40 oder 41 ausgebildet.

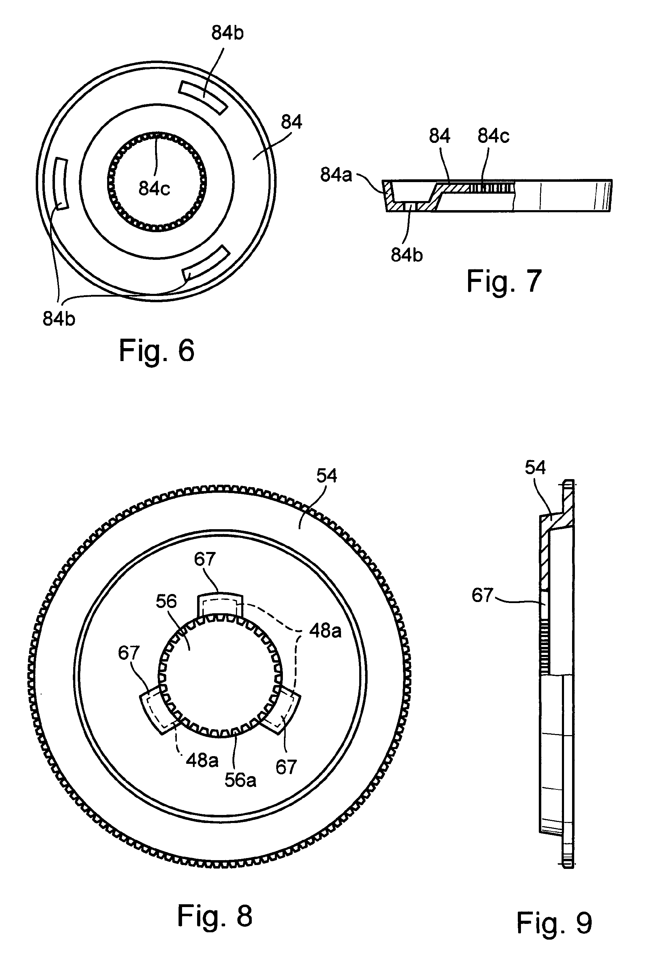

Die Kupplungskörper 40 und 41 der Schaltkupplung 38 nach Figur 3 weisen konische Reibflächen 40b bzw. 41b an Ansätzen auf. Jede der konischen Reibflächen 40b bzw. 41b paßt zu einer nach innen gerichteten konischen Reibfläche 54a oder 55a an einem Reibring 54 bzw. 55. Die Reibringe 54 und 55 sind aus Blech gefertigt, weisen in ihrem Querschnitt betrachtet die Form eines Napfes auf und sind außen mit einer Sperrverzahnung 54b bzw. 55b versehen. Einer der Reibringe 54 ist nicht maßstäblich in Figur 8 und Figur 9 dargestellt. Jeder der Reibringe 54 und 55 weist bodenseitig einen Durchbruch 56 bzw. 57 auf. Von dem Rand des Durchbruches 56 und 57 gehen radial nach innen hervorstehende Vorsprünge 56a bzw. 57a in Form von am Umfang verteilt angeordneten Zähnen hervor. Mit diesen Vorsprüngen 56a bzw. 57a greifen die Reibringe 54 bzw. 55 axial verschiebbar und um wenige Winkelgrade schwenkbar in die axial verlaufenden Nuten 49 der Getriebewelle 44 ein.

In der Schaltmuffe 39 in Figur 3 sind beidseitig Federelemente 58 aufgenommen. Die Federelemente 58 sind durch gleichmäßig am Umfang eines jeden Blechformteiles 45 bzw. 46 angeordnete Schraubenfedern 59 gebildet. Die Schraubenfedern 59 sind in Aufnahmen der Blechformteile 45, 46 gesichert.

Die nach Figur 3 in Richtung eines der Gangräder 42 oder 43 verschobene Schaltmuffe 39 überträgt die Schaltkraft zuerst auf die Schraubenfedern 59 an einer ihrer Seiten und verschiebt mit den Schraubenfedern 59 einen der Reibringe 54, 55 auf der Getriebewelle 44 axial in Richtung eines der Gangräder 42 bzw. 43. Die Schraubenfedern 59 sitzen mittels der durch die Schaltmuffe 39 übertragenden Schaltkraft vorgespannt zwischen der Schaltmuffe 39 und dem Reibring 54 bzw. 55. Der Reibring 54 oder 55 trifft mit seiner Reibfläche 54a bzw. 55a auf die Reibfläche 40b bzw. 41b an dem Kupplungskörper 40 bzw. 41, womit der Vorgang der Synchronisation beginnt. Die Kupplungsverzahnung 50 bzw. 51 der Schaltmuffe 39 trifft auf die Sperrverzahnung 54b bzw. 55b an dem Reibring 54 oder 55 und kann erst nach Abschluß der Synchronisation durch diese hindurch verschoben werden. Dazu schwenkt der Reibring 54 innerhalb eines Schwenkbereiches leicht um seine Mittelachse auf der Getriebewelle 44 bis die Kupplungsverzahnung 50 bzw. 51 durch die Sperrverzahnung 54b und 55b hindurch geschoben werden kann. Dabei werden die Schraubenfedern 59 weiter zusammengedrückt und bleiben bis zum Rückführen der Schaltmuffe 39 in die Neutralstellung durch die Schaltkraft vorgespannt.

Der axiale Freiraum in Figur 3 für die Nabe 48 der Schaltmuffe 39 ist durch von dem Rand des Durchbruches 56 bzw. 57 radial nach außen weggehende Aussparungen 67 bzw. 68 an dem Reibring 54 bzw. 55 geschaffen. Die Nabe 48 besteht an ihren beiden Längsseiten aus hervorstehenden Abschnitten 48a, an denen anteilig die Keile 47 ausgebildet sind. Jeder der Abschnitt 48a steht einer der Aussparungen 67 bzw. 68 gegenüber und taucht in diese beim axialen Verschieben der Schaltmuffe 39 ein. In Figur 8 sind die in die Aussparung 67 eingetauchten Abschnitte 48a gestrichelt dargestellt.

Nachdem Angleichen der Drehzahlen der Getriebewelle 44 und eines der Gangräder 42, 43 greift die Schaltmuffe 39 mit einer der Kupplungsverzahnungen 50 bzw. 51 in eine der Gegenverzahnungen 40a oder 41a ein und verbindet somit die Getriebewelle 44 verdrehfest mit einem der Gangräder 42, 43. Eine nicht dargestellte Schaltgabel überträgt während des vorstehend beschriebenen Vorganges die Schaltkraft zur Schaltmuffe 39 und greift dazu in eine radial nach außen offene Ringnut 60 ein. Die Ringnut 60 ist durch die Mantelflächen der Blechformteile 45 und 46 begrenzt.

Die Blechformteile 45 und 46 aus Stahlblech der Schaltmuffe 39 schließen eine Aufnahme 61 zwischen sich ein. Die Aufnahme 61 ist durch in die Stirnseiten der Blechformteile 45 bzw. 46 eingebrachte Ausformung 61a und 61b gebildet. In dieser Aufnahme 61 ist ein durch eine Feder 62 vorgespanntes Arretierelement 63 aufgenommen. Das Arretierelement 63 ist in diesem Fall durch eine Kugel gebildet und mittels der Feder 62 in Richtung der Getriebewelle 44 vorgespannt. Das Arretierelement 63 verrastet dabei in eine Rastausnehmung 64 in der Getriebewelle 44. Die Schaltmuffe 39 ist mittels des Arretierelementes 63 in einer neutralen Stellung zwischen den Gangrädern 42 und 43 arretiert dargestellt und kann aber auch mit dem Arretierelement 63 wahlweise in den Rastausnehmungen 65 bzw. 66 in einer der Schaltstellungen arretiert sein.

Figur 4 zeigt ein Ausführungsbeispiel einer Schaltkupplung 69 mit einer doppelten Synchronisation. Die Schaltkupplung 69 weist eine Schaltmuffe 70 sowie zwei scheibenförmig ausgebildete Kupplungskörper 71 und 72 an Gangrädern 73 bzw. 74 auf. Die Gangräder 73 und 74 sind jeweils rotierend auf einer Getriebewelle 75 gelagert. Die Schaltmuffe 70 ist zwischen den Gangrädern 73 und 74 angeordnet und aus zwei Blechformteilen 76 und 77 zusammengesetzt. Die Blechformteile 76 und 77 sind jeweils durch Ziehen geformt und miteinander verschweißt. Jedes der Blechformteile 76 und 77 weist einen Anteil einer Nabe 78 mit radial nach innen abgehenden Zähnen 78a auf.

Mit den Zähnen 78a greift die Schaltmuffe 70 verdrehfest sowie in beide Richtungen axial verschiebbar in längsverlaufende Nuten 79 eines Gegenzahnprofiles der Getriebewelle 75 ein.

Jedes der Blechformteile 76 und 77 der Schaltmuffe 70 aus Figur 4 ist außerdem außen mit je einer Kupplungsverzahnung 80 versehen. Die Kupplungsverzahnungen 80 weisen Zähne 80a auf. Zu den Kupplungsverzahnungen 80 gibt es jeweils eine Gegenverzahnung 71a bzw. 72a. Die Gegenverzahnung 71a bzw. 72a ist mit radial nach außen weisenden Zähnen an den Kupplungskörpern 71 bzw. 72 ausgebildet.

Die Kupplungskörper 71 und 72 der Schaltkupplung 69 nach Figur 4 sind jeweils mit einem Zwischenring 82 gekoppelt. Der Zwischenring 82 weist innen und außen eine konische Reibfläche 82a bzw. 82b auf. Jeder der inneren konischen Reibflächen 82a ist eine äußere Reibfläche 84a an einem inneren Reibring 84 zugeordnet und die äußere konische Reibfläche 82b paart sich mit einer inneren konischen Reibfläche 83a an einem äußeren Reibring 83. Die Reibringe 83 und 84 sind aus Blech gefertigt. Der äußere Reibring 83 ist außen mit einer Sperrverzahnung 83b versehen. Von dem Rand eines Durchbruches 85 des inneren Reibringes 84 gehen radial nach innen hervorstehende Vorsprünge 85a in Form von am Umfang verteilt angeordneter Zähne hervor. Der innere Reibring 84 sitzt drehfest angeordnet auf der Getriebewelle 75. Dazu greift er mit den zahnähnlich ausgebildeten Vorsprüngen 85a in die axial verlaufenden Nuten 79 der Verzahnung an der Getriebewelle 75 ein. Der äußere Reibring 83 ist axial verschiebbar in dem inneren Reibring 84 eingehängt und um wenige Winkelgrade schwenkbar insgesamt aber verdrehfest zur Getriebewelle 75 angeordnet. Dazu weist der äußere Reibring 83 axial hervorstehende Haltenasen 83c auf von denen jeweils eine in ein entsprechendes Langloch 84b des inneren Reibringes eingreift.

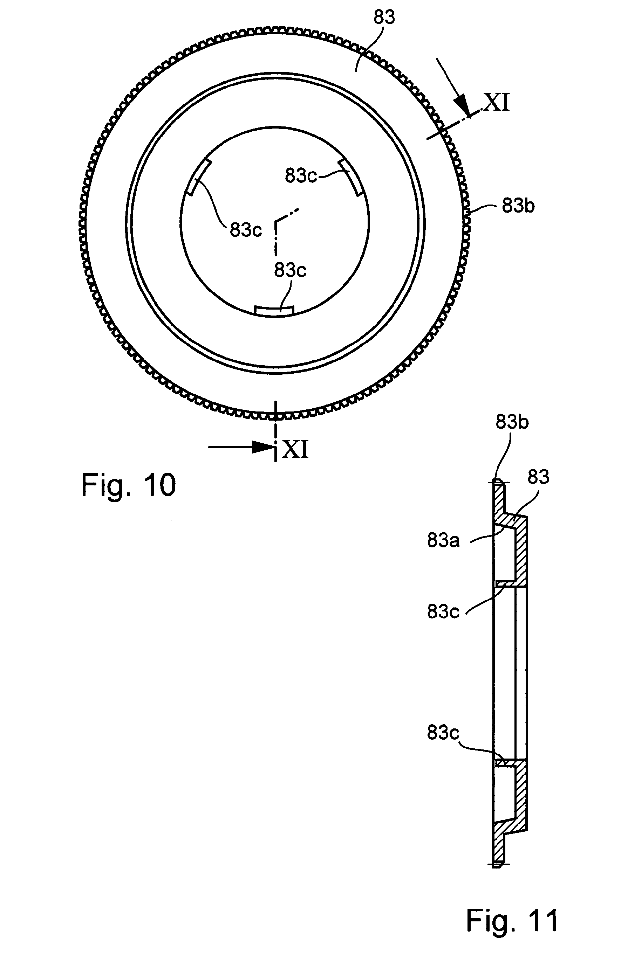

In den Figuren 10 und 11 ist der äußere Reibring 83 aus Figur 4 nicht maßstäblich dargestellt. Der äußere Reibring 83 ist ein aus Blech geformter sowie napfförmig ausgebildeter Synchronring. An dem Rand des äußeren Reibringes 83 ist die Sperrverzahnung 83b durch Stanzen und Prägen ausgebildet. Die innere Reibfläche 83a ist wahlweise aus dem Material des äußeren Reibringes und entsprechender Feinbearbeitung oder durch eine Beschichtung erzeugt. Der Boden des Napfes ist gelocht, wobei während des Herstellungsprozesse in einer Zwischenstufe nach dem Lochen wenigstens drei am Umfangs des Loches verteilt angeordnete sowie radial nach innen weisende Laschen verbleiben. Diese Laschen sind anschließend axial durchgestellt oder umgebogen und bilden die Haltenasen 83c zum Aufhängen des äußeren Reibringes 83 in dem inneren Reibring 84. Der innere Reibring 84 ist in den Figuren 6 und 7 nicht maßstäblich dargestellt. Der innere Reibring 84 aus Blech weist außer der äußeren Reibfläche 84a und einer radial nach innen weisenden Verzahnung 84c auch noch die Langlöcher 84b auf. Die innere Verzahnung 84c korrespondiert für einen verdrehfesten Sitz mit den Nuten 79 der Getriebewelle 75. Die Langlöcher 84b sind mit gleichem Radius zur Mittelachse und mit gleicher Teilung am Umfang wie die Haltenasen 83c am äußeren Reibring 83 in den inneren Reibring 84 eingebracht. Die Langlöcher 84b sind mindestens so lang, dass genügend Freiheit für die Haltenasen 83c in Umfangsrichtung verbleibt, wenn der äußere Reibring während der Synchronisation und des damit verbundenen Sperrens funktionsbedingt ein paar Winkelgrade um seine Mittelachse schwenkt.

In der Schaltmuffe 70 nach Figur 4 sind beidseitig Federelemente 58 aufgenommen. Die Federelemente 58 sind durch gleichmäßige am Umfang eines jeden Blechformteiles 75 bzw. 76 angeordnete Schraubenfedern 59 gebildet.

Die nach Figur 4 in Richtung eines der Gangräder 73 oder 74 auf der Getriebewelle 75 verschobene Schaltmuffe 70 überträgt die Schaltkraft zuerst auf die Schraubenfeder 59 an eine ihrer Seiten und verschiebt mit den Schraubenfedern 59 einen der äußeren Reibringe 83 mit seiner inneren Reibfläche 83a auf die äußere Reibfläche 82b des Zwischenringes 82. Die Schraubenfedern 59 sitzen mittels der durch die Schaltmuffe 70 übertragenen Schaltkraft vorgespannt zwischen der Schaltmuffe 70 und dem äußeren Reibring 83. Die Reibflächen 83a, 82b und 82a sowie 84a verschieben sich dabei so ineinander, dass der Bremseffekt durch die zweite Reibpaarung aus dem Zwischenring 82 und dem inneren Reibring 84 verstärkt. ist. Die Kupplungsverzahnung 80 der Schaltmuffe 70 trifft auf die Sperrverzahnung 83b an dem Reibring 83 und kann erst nach Abschluss der Synchronisation axial durch diese hindurch verschoben werden. Dabei werden die Schraubenfedern 59 weiter zusammengedrückt und bleiben bis zum Rückführen der Schaltmuffe 70 in die Neutralstellung durch die Schaltkraft vorgespannt.

Der axiale Freiraum für die Nabe 78 der Schaltmuffe 70 ist in Figur 4 durch das Loch 81 im Boden des äußeren Reibringes 83 geschaffen, in den die Nabe 78 bei axialen Bewegungen eintaucht. Nach dem Angleichen der Drehzahlen der Getriebewelle 75 und eines der Gangräder 73 bzw. 74 greift die Schaltmuffe 70 in Figur 4 mit einer der Kupplungsverzahnungen 80 in eine der Gegenverzahnungen 71a bzw. 72a und verbindet somit die Getriebewelle 75 verdrehfest mit einem der Gangräder 73, 74. Eine nicht dargestellte Schaltgabel überträgt während des vorstehend beschriebenen Vorganges die Schaltkraft zur Schaltmuffe 70 und greift dazu in eine radial nach außen offene Ringnut 86 ein. Die Ringnut ist durch die Mantelflächen der aneinanderliegenden Blechformteile 76 und 77 begrenzt.

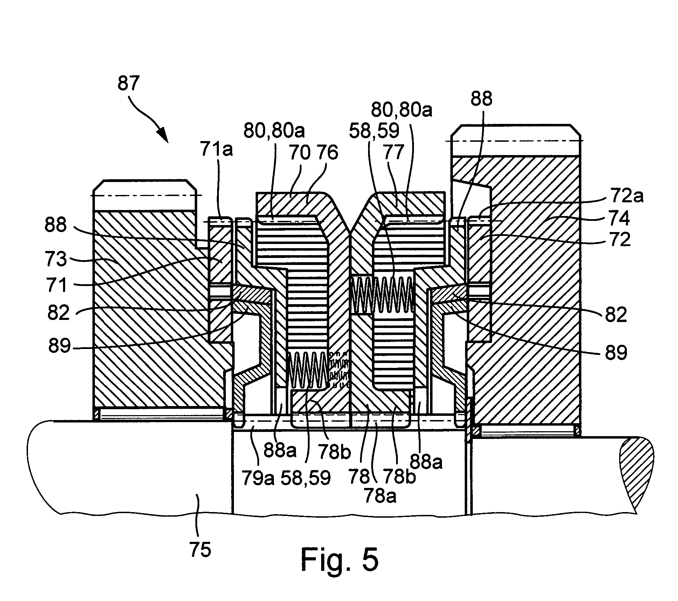

Das Ausführungsbeispiel einer Schaltkupplung 87 nach Figur 5 entspricht im Wesentlichen der Ausführung der Schaltkupplung 69 nach Figur 4. In der Schaltkupplung 69 sitzt der innere Reibring 84 direkt auf der Getriebewelle 75 und der äußere Reibring 83 ist an dem inneren Reibring 84 axial begrenzt verschiebbar aufgehängt. Dagegen sitzt in der Schaltkupplung 87 ein äußerer Reibring 88 axial verschiebbar und leicht schwenkbar direkt auf der Getriebewelle 75. Der innere Reibring 89 nach Figur 5 ist deshalb ohne Langlöcher ausgeführt. Der axiale Freiraum für die Nabe 78 ist durch von dem Rand der Verzahnung am Wellensitz radial nach außen weggehen Aussparungen 88a geschaffen. Die Nabe 78 weist wieder an ihren beiden Längsseiten hervorstehende Abschnitte 78b auf, an denen anteilig die Keile 78a der Verzahnung ausgebildet sind. Jeder der Abschnitte 78b steht einer der Aussparungen 88a gegenüber und taucht in diese beim axialen Verschieben der Schaltmuffe 70 ein. Alle weitere Teile und Funktionen der Schaltkupplungen 69 und 87 nach Figur 4 bzw. Figur 5 sind gleich.

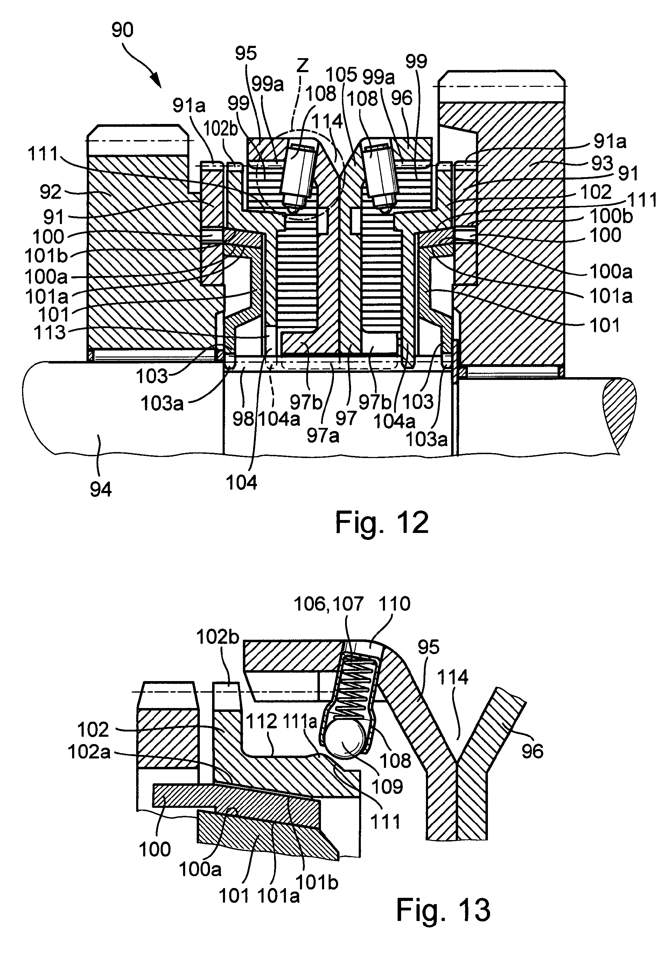

Figur 12 zeigt ein Ausführungsbeispiel einer Schaltkupplung 90 mit einer Doppel-Konus-Synchronisation. Die Schaltkupplung 90 weist eine Schaltmuffe 105 sowie jeweils einen Kupplungskörper 91 an einem Gangrad 92 und 93 auf. Die Gangräder 92 und 93 sind jeweils rotierend auf einer Getriebewelle 94 gelagert. Die Schaltmuffe 105 ist zwischen den Gangrädern 92 und 93 angeordnet und aus zwei Blechformteilen 95 und 96 zusammengesetzt. Die Blechformteile 95 und 96 sind jeweils durch Ziehen geformt und auf geeignete Art, wie durch Kleben, Schweißen, Vernieten, Verstemmen oder Verschrauben aneinander befestigt. Jedes der Blechformteile 95 und 96 weist einen Anteil einer Nabe 97 mit radial nach innen abgehenden Keilen 97a auf. Mit den Keilen 97a greift die Schaltmuffe 105 verdrehfest sowie in beide Richtungen axial verschiebbar in längsverlaufende Nuten 98 eines Keilprofiles der Getriebewelle 94 ein.

Jedes der Blechformteile 95 und 96 der Schaltmuffe 105 aus Figur 12 ist außerdem außen mit je einer Kupplungsverzahnung 99 versehen. Die Kupplungsverzahnungen 99 weisen längs ausgerichtete Zähne 99a auf. Zu den Kupplungsverzahnungen 99 gibt es jeweils eine Gegenverzahnung 91a. Die Gegenverzahnung 91a ist an dem Kupplungskörper 91 ausgebildet.

Die Kupplungskörper 91 der Schaltkupplung 90 nach Figur 12 sind jeweils mit einem Zwischenring 100 gekoppelt. Der Zwischenring 100 weist jeweils innen und außen eine konische Reibfläche 100a bzw. 100b auf. Jeder der inneren konischen Reibflächen 100a ist eine äußere Reibfläche 101a an einem inneren Reibring 101 zugeordnet. Die äußere konische Reibfläche 100b paart sich mit einer inneren konischen Reibfläche 102a an einem äußeren Reibring 102. Die Reibringe 101 und 102 sind aus Blech gefertigt. Der äußere Reibring 102 ist außen mit einer Sperrverzahnung 102b versehen. Von dem Rand eines Durchbruches 103 des inneren Reibringes 101 gehen radial nach innen hervorstehende und als Zähne ausgebildete Vorsprünge 103a hervor. Der innere Reibring 101 sitzt verdrehfest und axial fest angeordnet auf der Getriebewelle 94. Dazu greift er mit den Vorsprüngen 103a in die axial verlaufenden Nuten 98 der Getriebewelle 94 ein. Der äußere Reibring 102 ist axial verschiebbar sowie verdrehfest zur Getriebewelle 94 angeordnet. Dazu weist der äußere Reibring 102 von einem Durchbruch 104 radial nach innen hervorstehende zahnartig ausgebildete Vorsprünge 104a auf.

In der Schaltmuffe 105 nach Figur 12 und Figur 13 sind beidseitig Federelemente 106 aufgenommen. Die Federelemente 106 sind durch Schraubenfedern 107 gebildet. Wie Figur 12 und Figur 13 zeigen, sind die Schraubenfedern 107 jeweils in einem Gehäuse 108 geführt. In dem Gehäuse 108 ist außerdem eine Kugel 109 mittels der Schraubenfeder 107 vorgespannt gehalten. Die Schaltmuffe 105 weist an jeder ihrer Seiten vorzugsweise mindestens drei derartig gelagerte Kugeln 109 auf. Die Gehäuse 108 sind in Löcher bzw. Aufnahmen 110 eingepresst. Die in Richtung eines der Gangräder 92 oder 93 auf der Getriebewelle 94 verschobene Schaltmuffe 105 überträgt die Schaltkraft zuerst über die Gehäuse 108 auf die Schraubenfedern 107 und von dort auf die Kugeln 109 an einer Seite der Schaltmuffe 105. Jede der Kugeln 109 ist für den Anlauf an einer Rampe 111 eines der äußeren Reibringe 102 vorgesehen. Die Rampe 111 weist entweder einen kontinuierlich verlaufenden Anstieg auf (Figur 12) oder endet in einer Mulde 112 (Figur 13). Die Mittelachse der Schraubenfeder 107 und damit der Vektor der Federkraft der Schraubenfeder 107 und die Mittelachse der Getriebewelle 94 schließen in diesem Beispiel einen Winkel zwischen sich ein, der von einem rechten Winkel abweicht. Die Schaltmuffe 105 verschiebt mit den Kugeln 109 den äußeren Reibring 102 mit seiner inneren Reibfläche 102a auf die äußere Reibfläche 100b des Zwischenringes 100. Dabei stützt sich jede der Kugeln 109 an jeweils einer der Schraubenfedern 107 ab.

Die Reibflächen 102a, 100b sowie 100a und 101a in Figur 12 verschieben sich bei axialem Verschieben der Schaltmuffe 105 so ineinander, dass der Vorgang der Synchronisation durch die zweite Reibpaarung aus Zwischenring 100 und dem inneren Reibring 101 verstärkt ist. Die Kupplungsverzahnung 99 der Schaltmuffe 105 trifft auf die Sperrverzahnung 102b an dem Reibring 102 und kann erst nach dem Abschluss der Synchronisation durch diese hindurch verschoben werden. Dabei steigt jede Kugel 109 an der Rampe 111 auf und die Schraubenfedern 107 werden somit weiter zusammengedrückt. Je nach Auslegung der Rampe 111 bleiben die Schraubenfedern 107 entweder bis zum Rückführen der Schaltmuffe 105 in die Neutralstellung durch die Schaltkraft vorgespannt oder entspannen sich zumindest teilweise.

Die Schraubenfedern 107 entspannen sich dann teilweise, wenn jede der Kugeln 109 nach der Synchronisation jeweils ein in Figur 13 dargestelltes Ende 111a der Rampe 111 erreicht hat und dieses beim weiteren axialen Verschieben der Schaltmuffe 105 in Richtung eines Gangrades 92 überrollt. Die Kugeln 109 tauchen dann jeweils in eine Mulde 112 ein. Beim Zurückführen der Schaltmuffe 105 in die Neutralstellung nimmt die Schaltmuffe 105 über die in der Mulde 112 an dem Ende 111a anliegenden Kugeln 109 den äußeren Reibring 102 axial bis zu einem axialen Anschlag an der Getriebewelle 94 für den äußeren Reibring 102 mit und löst sich dann nach Überwindung des Endes 111a durch die Kugeln 109 von dem äußeren Reibring 102.

Der axiale Freiraum für die Nabe 97 der Schaltmuffe 105 in Figur 12 ist, ähnlich wie in Figur 8 dargestellt, durch von dem Rand des Durchbruches 104 radial nach außen weggehende Aussparungen 113 an dem äußeren Reibring 102 geschaffen. Die Nabe 97 besteht an ihren beiden Längsseiten aus hervorstehenden Abschnitten 97b, an denen anteilig die Keile 97a ausgebildet sind. Jeder der Abschnitte 97b steht einer der Aussparungen 113 gegenüber und taucht in diese beim axialen Verschieben der Schaltmuffe 105 ein.

Nach dem Angleichen der Drehzahlen der Getriebewelle 94 und eines der Gangräder 92 und 93 greift die Schaltmuffe 105 nach Figur 12 mit einer der Kupplungsverzahnungen 99 in eine der Gegenverzahnungen 91a ein und verbindet somit die Getriebewelle 94 verdrehfest mit einem der Gangräder 92, 93. Eine nicht dargestellte Schaltgabel überträgt während des vorstehend beschriebenen Vorganges die Schaltkraft zur Schaltmuffe 105 und greift dazu in eine radial nach außen offene Ringnut 114 ein. Die Ringnut 114 ist durch die Mantelflächen der Blechformteile 95 und 96 begrenzt.

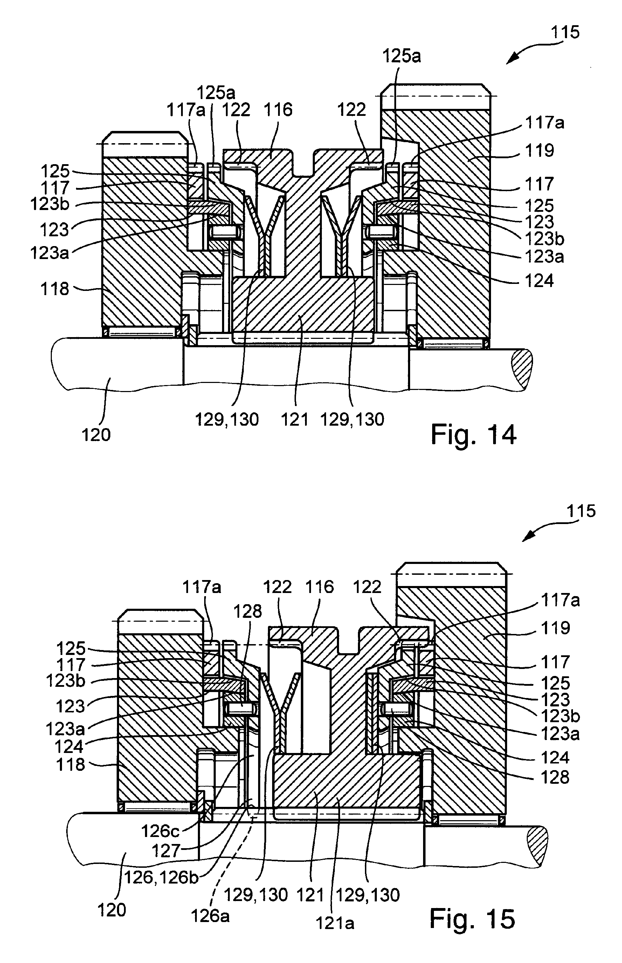

Figur 14 und 15 zeigen ein Ausführungsbeispiel einer Schaltkupplung 115 mit einer doppelten Synchronisation. Die Schaltkupplung 115 weist eine Schaltmuffe 116 sowie zwei Kupplungskörper 117 an Gangrädern 118, 119 auf. Die Gangräder 118, 119 sind jeweils rotierend auf einer Getriebewelle 120 gelagert. Die Schaltmuffe 116 ist zwischen den Gangrädern 118 und 119 angeordnet und sitzt mit einer Nabe 121 verdrehfest sowie in beide Richtungen axial verschiebbar auf der Getriebewelle 120.

Die Schaltmuffe 116 aus Figur 14 und Figur 15 ist außerdem beidseitig mit Kupplungsverzahnungen 122 versehen. Zu den Kupplungsverzahnungen 122 gibt es jeweils eine Gegenverzahnung 117a. Die Gegenverzahnung 117a ist an dem Kupplungskörper 117 ausgebildet.

Die Kupplungskörper 117 der Schaltkupplung 115 nach Figur 14 und Figur 15 sind jeweils mit einem Zwischenring 123 gekoppelt. Der Zwischenring 123 weist jeweils eine innere konische Reibfläche 123a und eine äußere konische Reibfläche 123b auf, die jeweils einem inneren Reibring 124 oder einem äußeren Reibring 125 zugeordnet sind. Die Reibringe 124, 125 und der Zwischenring 123 sind aus Blech gefertigt. Der äußere Reibring 125 ist außen mit einer Sperrverzahnung 125a versehen (Figur 15). Der innere Reibring 124 ist mittels zylindrischer Stifte 128 axial verschiebbar mit dem äußeren Reibring 125 gekoppelt. Der axiale Freiraum für die Nabe 121 der Schaltmuffe 116 in Figur 14 und Figur 15 ist ähnlich wie in Figur 8 dargestellt, durch von dem Rand 126b des Durchbruches 126 radial nach außen weggehende Aussparungen 126c an dem äußeren Reibring 125 geschaffen. Die Nabe 121 besteht an ihren beiden Längsseiten aus hervorstehenden Abschnitten 121a an denen anteilig die Verzahnung der Nabe ausgebildet ist. Jedem der Abschnitte 121a steht einer der Aussparungen 126c gegenüber und jeder der Abschnitte 121a taucht in diese beim axialen Verschieben der Schaltmuffe 116 ein (Figur 15).

Auf der Nabe 121 der Schaltmuffe 116 in Figur 14 und Figur 15 sind beidseitig Federelemente 129 aufgenommen und zentriert. Die Federelemente 129 sind durch in Reihe geschaltete Tellerfeder 130 gebildet.

Die nach Figur 15 in Richtung eines der Gangräder 119 auf der Getriebewelle 120 verschobene Schaltmuffe 116 überträgt die Schaltkraft zuerst auf die Tellerfedern 130 an einer ihrer Seiten und verschiebt mit den Tellerfedern 130 einen der äußeren Reibringe 125 gegen den Zwischenring 123. Die Tellerfeder 130 sitzen mittels der durch die Schaltmuffe 116 übertragenen Schaltkraft vorgespannt zwischen der Schaltmuffe 116 und dem äußeren Reibring 125. Die Reibflächen der Ringe 123, 124 und 125 schieben sich dabei so ineinander, dass die Synchronisation durch die zweite Reibpaarung aus dem Zwischenring 123 und dem inneren Reibring 124 verstärkt wird. Die Kupplungsverzahnung 122 der Schaltmuffe 116 kann erst nach Abschluss der Synchronisation durch die Sperrverzahnung 125a hindurch verschoben werden. Dabei werden die Tellerfedern 130 weiter zusammengedrückt und verbleiben bei bis zum Rückführen der Schaltmuffe 116 in die Neutralstellung durch die Schaltkraft vorgespannt.

Nach dem Angleichen der Drehzahlen der Getriebewelle 120 und eines der Gangräder 119 greift die Schaltmuffe 116, wie in Figur 15 dargestellt, mit einer der Kupplungsverzahnungen 122 in eine der Gegenverzahnung 117a ein und verbindet somit die Getriebewelle 120 verdrehfest mit einem der Gangräder 119.

### Liste der Bezugszeichen

- 1: Schaltkupplung
- 2: Schaltmuffe
- 3: Kupplungskörper
- 3a: Gegenverzahnung
- 4: Kupplungskörper
- 4a: Gegenverzahnung
- 5: Gangrad
- 6: Gangrad
- 7: Getriebewelle
- 7a: Längsachse
- 8: Blechformteil
- 9: Blechformteil
- 10: Nabe
- 10a: Keil
- 11: Teilungsebene
- 12: Schweißverbindung
- 13: Nut
- 14: Kupplungsverzahnung
- 14a: Zahn
- 15: Kupplungsverzahnung
- 15a: Zahn
- 16: Ringnut
- 17: Schaltkupplung
- 18: Schaltmuffe
- 19: Kupplungskörper
- 19a: Gegenverzahnung
- 20: Kupplungskörper
- 20a: Gegenverzahnung
- 21: Gangrad
- 22: Gangrad
- 23: Getriebewelle
- 23a: Längsachse
- 24: Blechformteil
- 25: Blechformteil
- 26: Teilungsebene
- 27: Nabe
- 28: Keil
- 29: Nut
- 30: Kupplungsverzahnung
- 30a: Zahn
- 31: Kupplungsverzahnung
- 31a: Zahn
- 32: Ringnut
- 33: Aufnahme
- 33a: Ausformung
- 33b: Ausformung
- 34: Feder
- 35: Arretierelement
- 36: Rastausnehmung
- 37: Nietverbindung
- 38: Schaltkupplung
- 39: Schaltmuffe
- 40: Kupplungskörper
- 40a: Gegenverzahnung
- 40b: Reibfläche
- 41: Kupplungskörper
- 41 a: Gegenverzahnung
- 41b: Reibfläche
- 42: Gangrad
- 42a: Absatz
- 43: Gangrad
- 43a: Absatz
- 44: Getriebewelle
- 45: Blechformteil
- 46: Blechformteil
- 47: Keil
- 48: Nabe
- 48a: Abschnitt
- 49: Nut
- 50: Kupplungsverzahnung
- 50a: Zahn
- 51: Kupplungsverzahnung
- 51a: Zahn
- 54: Reibring
- 54a: Reibfläche
- 54b: Sperrverzahnung
- 55: Reibring
- 55a: Reibfläche
- 55b: Sperrverzahnung
- 56: Durchbruch
- 56a: Vorsprung
- 57: Durchbruch
- 57a: Vorsprung
- 58: Federelement
- 59: Schraubenfeder
- 60: Ringnut
- 61: Aufnahme
- 61a: Ausformung
- 61b: Ausformung
- 62: Feder
- 63: Arretierelement
- 64: Rastausnehmung
- 65: Rastausnehmung
- 66: Rastausnehmung
- 67: Aussparung
- 68: Aussparung
- 69: Schaltkupplung
- 70: Schaltmuffe
- 71: Kupplungskörper
- 71a: Gegenverzahnung
- 72: Kupplungskörper
- 72a: Gegenverzahnung
- 73: Gangrad
- 74: Gangrad
- 75: Getriebewelle
- 76: Blechformteil
- 77: Blechformteil
- 78: Nabe
- 78a: Zahn
- 78b: Abschnitt
- 79: Nut
- 80: Kupplungsverzahnung
- 80a: Zahn
- 81: Loch
- 82: Zwischenring
- 82a: innere Reibfläche
- 82b: äußere Reibfläche
- 83: äußerer Reibring
- 83a: innere Reibfläche
- 83b: Sperrverzahnung
- 83c: Haltenase
- 84: innerer Reibring
- 84a: äußere Reibfläche
- 84b: Langloch
- 84c: innere Verzahnung
- 85: Durchbruch
- 85a: Vorsprung
- 86: Ringnut
- 87: Schaltkupplung
- 88: äußerer Reibring
- 88a: Aussparung
- 89: innerer Reibring
- 90: Schaltkupplung
- 91: Kupplungskörper
- 91 a: Gegenverzahnung
- 92: Gangrad
- 93: Gangrad
- 94: Getriebewelle
- 95: Blechformteil
- 96: Blechformteil
- 97: Nabe
- 97a: Keil
- 97b: Abschnitt
- 98: Nut
- 99: Kupplungsverzahnung
- 99a: Zahn
- 100: Zwischenring
- 100a: innere Reibfläche
- 100b: äußere Reibfläche
- 101: innerer Reibring
- 101a: äußerer Reibfläche
- 102: äußerer Reibring
- 102a: innere Reibfläche
- 102b: Sperrverzahnung
- 103: Durchbruch
- 103a: Vorsprung
- 104: Durchbruch
- 104a: Vorsprung
- 105: Schaltmuffe
- 106: Federelement
- 107: Schraubenfeder
- 108: Gehäuse
- 109: Kugel
- 110: Loch
- 111: Rampe
- 111a: Ende
- 112: Mulde
- 113: Aussparung
- 114: Ringnut
- 115: Schaltkupplung
- 116: Schaltmuffe
- 117: Kupplungskörper
- 117a: Gegenverzahnung
- 118: Gangrad
- 119: Gangrad
- 120: Getriebewelle
- 121: Nabe
- 121a: Abschnitt
- 122: Kupplungsverzahnung
- 123: Zwischenring
- 123a: innere Reibfläche
- 123b: äußere Reibfläche
- 124: innerer Reibring
- 125: äußerer Reibring
- 125a: Sperrverzahnung
- 126: Durchbruch
- 126a: Vorsprung
- 126b: Rand
- 126c: Aussparung
- 127: Keilprofil
- 128: Stift
- 129: Federelement
- 130: Tellerfeder

## Patentansprüche

1. Schaltkupplung (38, 69, 87, 90, 115) mit einer Synchronisiereinrichtung, die Schaltkupplung (38, 69, 87, 90, 115) zumindest bestehend aus wenigstens einem auf einer Getriebewelle (44, 75, 94, 120) angeordnetem Gangrad (42, 43, 73, 74, 92, 93, 118, 119) und bestehend aus einer verdrehfest zu der Getriebewelle (44, 75, 94, 120) angeordneten sowie bei einem Schaltvorgang mittels wenigstens einer Schaltkraft axial zu der Getriebewelle (44, 75, 94, 120) verschiebbaren Schaltmuffe (39, 70, 105, 116) mit einer Kupplungsverzahnung (50, 51, 80, 99, 122) und die Schaltkupplung (38, 69, 87, 90, 115) weiterhin bestehend aus wenigstens einem der Getriebewelle (44, 75, 94, 120) verdrehfest zugeordneten Reibring (54, 55, 83, 84, 88, 89, 101, 102, 124, 125) sowie mindestens einem mittels der Schaltmuffe (39, 70, 105, 116) beaufschlagten elastischen Federelement (58, 106, 129), wobei das Gangrad (42, 43, 73, 74, 92, 93, 118, 119) über eine Gegenverzahnung (40a, 40b, 71a, 72a, 91a, 117a) zu der Kupplungsverzahnung (50, 51, 80, 99, 122) verdrehfest mit der Getriebewelle (44, 75, 94, 120) verbindbar ist und der Reibring (54, 55, 83, 84, 88, 89, 101, 102, 124, 125) bei einem Schaltvorgang zumindest zeitweise eine Reibpaarung mit einer wenigstens verdrehfest mit dem Gangrad (42, 43, 73, 74, 92, 93, 118, 119) gekoppelten Reibfläche (40b, 41b, 82a, 82b, 100a, 100b, 123a, 123b) bildet, **dadurch gekennzeichnet, dass** das Federelement (58, 106, 129) zwischen der Schaltmuffe (39, 70, 105, 116) und dem Reibring (54, 55, 83, 102, 125) angeordnet ist, wobei das Federelement (58, 106, 129) wenigstens zeitweise die Schaltkraft von der Schaltmuffe (39, 70, 105, 116) auf den Reibring (54, 55, 83, 102, 125) übertragend sich vorgespannt an der Schaltmuffe (39, 70, 105, 116) abstützt (Figuren 3, 4, 5, 12, 14, 15).

2. Schaltkupplung nach Anspruch 1, **dadurch gekennzeichnet, dass** die Schaltmuffe (39, 70, 105, 116) axial verschiebbar auf der Getriebewelle (44, 75, 94, 120) sitzt und dass das Federelement (58, 106, 129) in der Schaltmuffe (39, 70, 90a, 116) aufgenommen ist (Figuren 3, 4, 5, 12, 13, 14, 15).

3. Schaltkupplung nach Anspruch 2, **dadurch gekennzeichnet, dass** das elastische Federelement (58, 106) durch mindestens drei am Umfang der Schaltmuffe (39, 70, 90) angeordnete Schraubenfedern (59, 107) gebildet ist (Figuren 3, 4, 5, 12, 13).

4. Schaltkupplung nach Anspruch 3, **dadurch gekennzeichnet, dass** die Schraubenfedern (107) jeweils in einem Gehäuse (108) geführt sind und die Schaltkraft jeweils von dem Federelement (106) über eine in dem Gehäuse (108) geführte sowie gehaltene Kugel (109) auf den Reibring (102) übertragen ist (Figuren 12, 13).

5. Schaltkupplung nach Anspruch 4, **dadurch gekennzeichnet, dass** die Kugel (109) an eine an dem Reibring (102) ausgebildeten Rampe (111) abläuft, wobei die Konturlinie der Rampe (111) in Richtung des Gangrades (92, 93) wenigstens anfangs einen ansteigenden Verlauf aufweist (Figuren 12, 13).

6. Schaltkupplung nach Anspruch 2, **dadurch gekennzeichnet, dass** mehrere der Federelemente (59, 106) am Umfang einer zumindest zweiteilig aus Blech gebildeten Schaltmuffe (39, 70, 105) angeordnet sind, wobei die Schaltmuffe (39, 70, 105) eine Nabe (48, 78, 97) mit radial am Innenumfang der Nabe (48, 78, 97) hervorstehenden sowie umfangsseitig zueinander beabstandet in das Blech geformten Keilen (47, 78a, 97a) aufweist, die Nabe (48, 78, 97) mittels der Keile (47, 78a, 97a) verdrehfest auf der Getriebewelle (44, 75, 94) angeordnet ist und die Schaltmuffe (39, 70, 105) wenigstens einseitig mit einer in das Blech geformten Kupplungsverzahnung (50, 51, 80, 99) versehen ist (Figuren 3, 4, 5, 12).

7. Schaltkupplung nach Anspruch 2, **dadurch gekennzeichnet, dass** die Schaltmuffe (39) mittels wenigstens eines Arretierelementes (63) in zwei Schaltstellungen arretierbar ist, wobei das Arretierelement (63) zwischen der Schaltmuffe (39) und der Getriebewelle (44) angeordnet ist (Figur 3).

8. Schaltkupplung nach Anspruch 1, **dadurch gekennzeichnet, dass** das Federelement (129) durch mindestens eine radial auf einer Nabe (121) der Schaltmuffe (116) zentrierte Tellerfeder (130) gebildet ist (Figur 14 und 15).
